# EUROPEAN PATENT APPLICATION

(11) **EP 4 586 697 A1**
(43) Date of publication of application: **16.07.2025**
(21) Application number: 24223688.3
(22) Date of filing: 30.12.2024
(51) Int. Cl.: H04W 48/20, H04W 8/00, H04W 40/22

(54) **NETWORK CONNECTION MODULE AND METHOD FOR SELECTING RELAY NODE THEREOF**

(30) Priority: 12.01.2024 TW 113101447
(71) Applicant: Gunitech Corp., Taoyuan City 330020 (TW)
(72) Inventor: HUNG, Chien-Ju, 330020 Taoyuan City (TW); LO, Li-Sung, 330020 Taoyuan City (TW); LIN, Xiao-Juan, 330020 Taoyuan City (TW); WANG, Ming-Yi, 330020 Taoyuan City (TW); WU, Shang-Wei, 330020 Taoyuan City (TW)
(74) Representative: Viering, Jentschura & Partner mbB Patent- und Rechtsanwälte

(57) **Abstract**

A network connection module and a method for selecting a bridging point thereof are disclosed. The method for selecting the bridging point is used for an electronic device to select the bridging point in a network environment which has at least one node capable of connecting to the electronic device. The method includes the following steps: when the electronic device needs to connect, searching for at least one node; confirming whether the electronic device has a connection requirement or whether there is a specified node among the at least one node; if yes, identifying a suitable node from the at least one node based on the connection requirement or the specified node; and if a suitable node is found, randomly selecting a bridging point from the suitable node; and if not, randomly selecting a bridging point from the at least one node.

## Description

### BACKGROUND OF THE INVENTION

### 1. Field of the Invention

The present invention relates to a network connection module and a method for selecting a bridging point, specifically a network connection module and its method for randomly selecting a bridging point from suitable nodes.

### 2. Description of the Related Art

With the advancement of technology, various wireless network applications have flourished, extending also to the automated connection methods of field devices. Therefore, in the prior art, a mesh network environment has been utilized, taking advantage of its lack of distance limitations and independence from hubs, to achieve the goal of field automation control. Users can connect their electronic devices to surrounding nodes to transmit signals, thereby achieving communication and even control over field devices. This technology requires electronic devices to transmit signals via a bridging point. In the selection of a bridging point, electronic devices in the prior art often connect preferentially to the bridging point with the strongest signal strength. However, in large public places with high foot traffic, this can lead to all electronic devices connecting to the same bridging point and cause data transmission congestion. Additionally, another scenario in the prior art is when a user remains connected to a poorly signaled bridging point despite being too far from it. Due to data hopping transmission in mesh networks, such a case can lead to delays in data transmission.

As the coverage area of nodes in wireless networks becomes increasingly extensive, beyond establishing broader and faster transmission methods, network resource allocation has also become more critical. Therefore, it is necessary to invent a new network connection module and a method for selecting a bridging point to address the shortcomings of the prior art.

### SUMMARY OF THE INVENTION

It is a primary object of the present invention to provide a method for selecting a bridging point, which achieves the effect of randomly selecting a bridging point from suitable nodes.

Another primary objective of the present invention is to provide a network connection module used for the above method.

To achieve the objects above, a method for selecting a bridging point according to the present invention is used by an electronic device within a network environment to select the bridging point, wherein the network comprises at least one node capable of connecting to the electronic device. The method for selecting a bridging point includes the following steps: when the electronic device is to connect, searching for at least one node; determining whether the electronic device has a connection requirement or if there is a specified node among the at least one node; if the electronic device has a connection requirement or there is a specified node among the at least one node, identifying a suitable node based on the connection requirement or specified node from the at least one node; if a suitable node is found, randomly selecting a bridging point from the suitable node; and if the electronic device does not have a connection requirement and there is no specified node among the at least one node, randomly selecting the bridging point from the at least one node.

A network connection module of the present invention is used by an electronic device to enable the electronic device to select a bridging point within a network environment, where the network comprises at least one node capable of connecting to the electronic device. The network connection module includes a search module and a processing module. The search module is used to search for at least one node. The processing module is electrically connected to the search module and is used, when the electronic device is to connect, to determine whether the electronic device has a connection requirement or if there is a specified node among the at least one node; if the electronic device has a connection requirement or there is a specified node among the at least one node, then the processing module identifies a suitable node based on the connection requirement or a specified node from the at least one node; if a suitable node is found, the processing module randomly selects a bridging point from the suitable node and connects the electronic device to the bridging point; and if the electronic device does not have a connection requirement and there is no specified node among the at least one node, then the processing module randomly selects a bridging point from the at least one node and connects the electronic device to the bridging point.

### BRIEF DESCRIPTION OF THE DRAWINGS

All of the objects and advantages of the present invention will become apparent from the following description of the accompanying drawings, which disclose several embodiments of the present invention. It is to be understood that the drawings are to be used for purposes of illustration only, and not as a definition of the invention.
Fig. 1 illustrates a schematic diagram of a network connection module structure of the present invention.
Figs. 2A-2B illustrate flowcharts of the steps in the method for selecting a bridging point according to the present invention.
Fig. 3A illustrates a schematic diagram of a first embodiment of the electronic device within a network environment according to the present invention.
Fig. 3B illustrates a schematic diagram of a second embodiment of the electronic device within the network environment according to the present invention.
Fig. 3C illustrates a schematic diagram of a third embodiment of the electronic device within the network environment according to the present invention.
Fig. 3D illustrates a schematic diagram of a fourth embodiment of the electronic device within the network environment according to the present invention.

### DETAILED DESCRIPTION OF THE PREFERRED EMBODIMENTS

Hereafter, the technical content of the present invention will be better understood with reference to preferred embodiments.

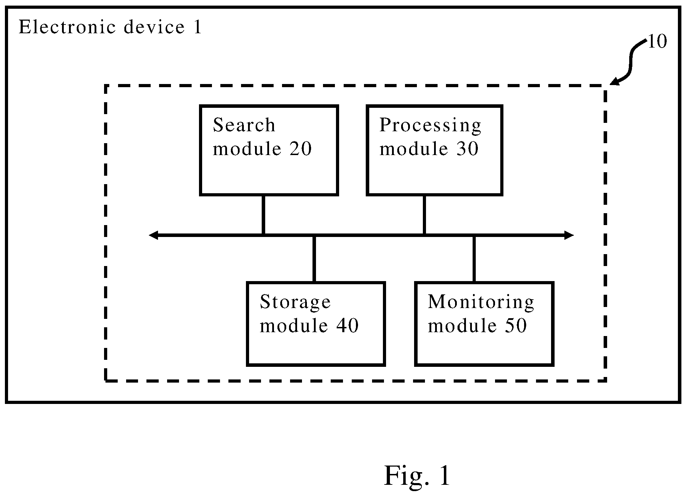

Please refer to Fig. 1, which illustrates a schematic diagram of the network connection module structure of the present invention.

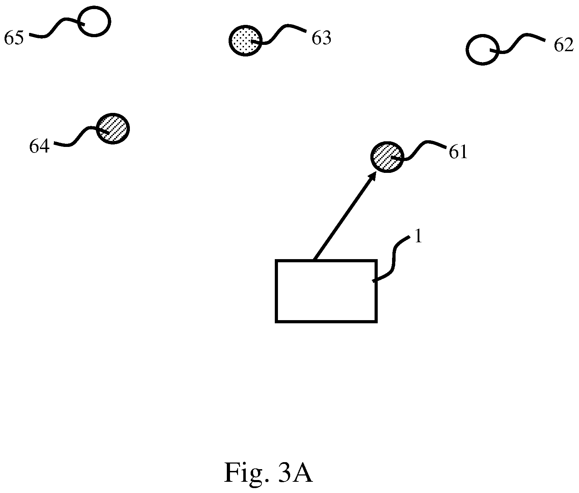

The network connection module 10 of the present invention is designed to enable an electronic device 1 to connect to a node within a network environment. The electronic device 1 can be any device with networking capabilities, such as a smartphone, a tablet, or a desktop computer system. Each of the nodes 61 to 65, as shown in Fig. 3A, can represent any network access device, electronic device, or even controlled devices, such as televisions, refrigerators, or ovens, but the present invention is not limited to these. The network connection module 10 and its components can be constructed as hardware devices, software programs combined with hardware, or firmware combined with hardware, such as a computer software program stored on a computer-readable medium to be executed by the electronic device 1, but the present invention is not limited to these implementations. In embodiments of the present invention, not all modules of the network connection module 10 need to be located within the electronic device 1; some modules can be placed in other nodes or systems. Although the implementation examples described in the present invention utilize mesh networks, the network connection environment of the present invention is not limited to mesh networks.

The network connection module 10 may include a search module 20, a processing module 30, a storage module 40, and a monitoring module 50. The search module 20 is used to search for multiple nodes 61 to 65 within the network environment, wherein each node can represent different network access devices, electronic devices, controlled devices, etc. The processing module 30, which is electrically connected to the search module 20, is used to confirm if there is a suitable node among the multiple nodes 61 to 65 found by the search module 20. A suitable node is one that can meet the connection requirements of the electronic device 1. Connection requirements may include signal strength, predefined priority, signal source, response time, usage traffic, time, hops, area, preference, authority, distance, frequency, temperature, humidity, altitude, atmospheric pressure, longitude, latitude, coordinates, load, age, lifespan, version, power, gender, identity, priority level, power consumption, air quality, luminous flux, spectrum, bandwidth, etc. The electronic device 1 may have different connection requirements under different circumstances, but the present invention is not limited to the listed items. Also, the connection requirements of the electronic device 1 may require all listed items to be met or only require one or a combination of multiple items to be met. For example, a user's connection requirement for gaming software may require a 6G or faster network source, while a chatting application may only require a 4G or 5G connection. Therefore, the processing module 30 selects a suitable node from the multiple nodes 61-65 based on the connection requirement of the electronic device 1 at the time, such as finding a node that supports 6G or faster transmission speeds.

Additionally, among the multiple nodes 61-65, there may be specified nodes, and the processing module 30 identifies these specified nodes as suitable nodes. A specified node can be a node to which the electronic device 1 frequently connects or a node preferred by the user, but the present invention is not limited to these examples. Connection requirements or specified nodes can be determined by the processing module 30 based on the programs executed by the electronic device 1 or set by the user during connection. Default settings or settings obtained by the electronic device 1 can also be considered connection requirements, but the present invention is not limited to the items listed above.

Users can also set connection requirements as default or preset connection conditions, which are stored in the storage module 40. The processing module 30 prioritizes these default or preset connection conditions when selecting suitable nodes. For example, a user set chat communication requirements for 6 PM to 7 PM and set a gaming or video time for 8 PM to 10 PM and store these requirements for the respective time periods. From 6 PM to 7 PM, the processing module 30 chooses a 4G or 5G node as the suitable node, and from 8 PM to 10 PM, it chooses a 6G node as the suitable node. Similarly, users can set different requirements for working in a home office and relaxing in the bedroom; these areas can also be a home, a campus, an office, a department store, etc., but the present invention is not limited to these areas.

Default or preset connection conditions can also be based on user preferences or habits. For example, after analyzing the behavior of a user operating the electronic device 1, the processing module 30 can use the statistical data from this behavior analysis as the default connection condition. The statistical data generated from monitoring of the behavior may vary slightly with changes in people, events, time, objects, and places, and thus the default connection condition is also updated accordingly.

The default or preset connection conditions can be at least one condition or a combination thereof. For example, connection requirements for working in a home office from 8 PM to 10 PM from Monday to Friday can be set, and another set of requirements for leisure in the living room from 8 PM to 10 PM on Saturday and Sunday can be established, combining the conditions of area and time. However, the content of the default or preset connection conditions in the present invention is not limited to the conditions listed above.

In an embodiment of the present invention, the processing module 30 may identify multiple nodes among the nodes 61-65 that meet the connection requirements, or it may find multiple specified nodes and set these nodes as multiple suitable nodes. If a node meeting the connection requirement and a specified node are found among the nodes, the processing module 30 sets these two nodes as multiple suitable nodes. After identifying multiple suitable nodes, the processing module 30 randomly selects a bridging point from these suitable nodes for the electronic device 1 to connect directly to. For example, in large venues such as airport concourses or exhibition halls, where there are simultaneous connection needs from multiple users, if all users' needs are for message transmission, the number of suitable nodes found by the search module 20 within a certain communication range would be the same. At this time, the processing module 30 uses a random selection of a node as the bridging point, which can prevent all users from connecting to the same node and thereby avoid network congestion. The random selection method can include a time parameter for differentiation, further avoiding the situation where users connect to the same bridging point during random selection. In another embodiment of the present invention, the nodes that meet the connection requirements and specified nodes may also have a priority order for connection, such as prioritizing the specified node as the bridging point, but the present invention is not limited to this.

Furthermore, if there is only one suitable node, for example, if the processing module 30 identifies only one node that meets the connection requirements from the nodes or there is only one specified node, the processing module 30 directly selects this node as the bridging point for the electronic device 1 to connect to it.

If there are no specified nodes among the multiple nodes 61 to 65 and no nodes that fully meet the connection requirements, the processing module 30 further uses a random method to select the bridging point from the multiple nodes 61 to 65, or it finds the node closest to meeting the connection requirement settings among the multiple nodes 61-65 for selection as the bridging point. For example, connection requirements can include conditions such as signal strength, predefined priority, signal source, response time, priority level, power consumption, bandwidth, etc., the connection requirements of electronic device 1 may need to meet six of these requirements. If the processing module 30 cannot find a node that meets the six requirements, it can settle for a node that meets five or four of the requirements as the suitable node for the electronic device 1 to connect to it as the bridging point. For instance, the electronic device 1 can set requirements such as signal strength of -56, a source of 5G, and a response time of less than 5 seconds. If the processing module 30 cannot find a suitable node that meets these three requirements, it may exclude one condition, such as signal strength, and instead select a node as the bridging point that is a 5G source and has a response time of less than 5 seconds. Similarly, if the electronic device 1 sets a single requirement condition of signal strength -56 and the processing module 30 cannot find a node that meets the signal strength of -56, it may search for the closest node with a signal strength of -58 as the bridging point. However, the method of finding the node closest to the connection requirement setting in the present invention is not limited to the methods listed above.

After the bridging point is found and the electronic device 1 is connected to it, the monitoring module 50 continuously monitors whether the bridging point still meets the connection requirements of the electronic device 1 or has communication capabilities. For example, the electronic device 1 may change connection requirements due to running different applications, or the electronic device 1 or bridging point may move, leading to non-compliance with the connection requirements or a lack of communication capabilities. In this case, the processing module 30 will re-select a suitable node based on the connection requirements or specified nodes from the multiple nodes 61-65 and randomly set a new bridging point. The lack of communication capabilities may include disconnection, signal loss, or no response from the node, but the present invention is not limited to these factors.

If the electronic device 1 does not set connection requirements or if the processing module 30 cannot confirm the connection requirements of the electronic device 1 and there are no specified nodes among the at least one node, the processing module 30 directly uses a random method to select the bridging point from the at least one node and connects the electronic device 1 to the bridging point. After the electronic device 1 connects to the bridging point, the monitoring module 50 continuously monitors whether the bridging point still has communication capabilities with the electronic device 1. For example, if the electronic device 1 has not set any requirements or specified nodes, the processing module 30 further uses a random method to select the bridging point from the at least one node and connect the electronic device 1. If the electronic device 1 or bridging point moves, leading to disconnection or signal loss and a resultant lack of communication capabilities, the processing module 30 will re-search the multiple nodes 61 to 65 and randomly select a new bridging point from the multiple nodes 61 to 65.

It should be noted that the modules of the network connection module 10 can be constructed as hardware devices, software programs combined with hardware, or firmware combined with hardware, such as a computer program product stored on a computer-readable medium that can be read and executed to achieve the functions of the present invention, but the present invention is not limited to these implementations. Furthermore, this embodiment only exemplifies a preferred embodiment of the present invention; to avoid redundancy, not all possible variations and combinations are described in detail. However, those skilled in the art should understand that not all modules or components mentioned above are necessary. To implement the present invention, other more detailed conventional modules or components may also be included. Modules or components may be omitted or modified as needed, and it is not implied that no other modules or components exist between any two modules.

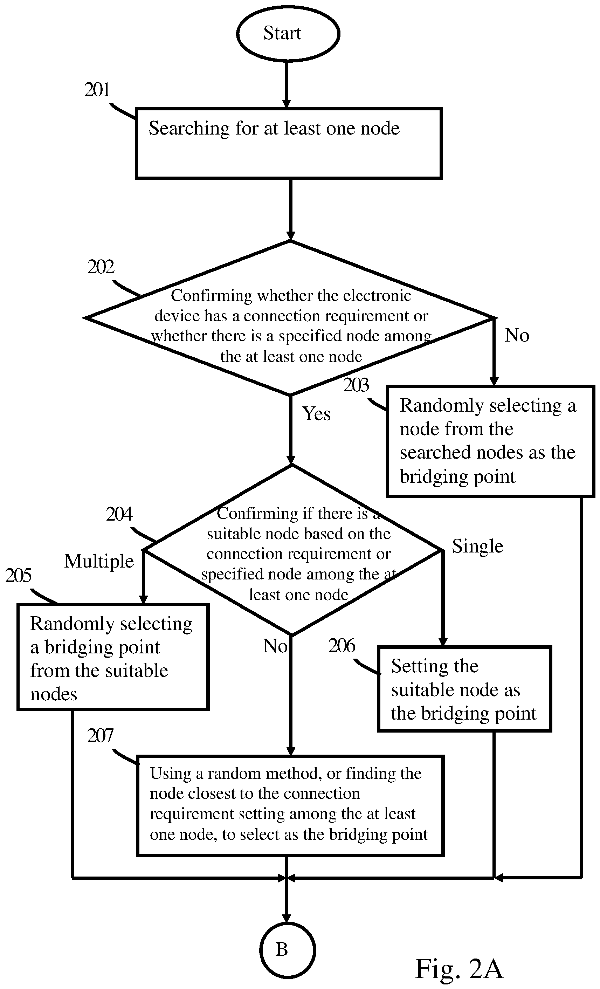

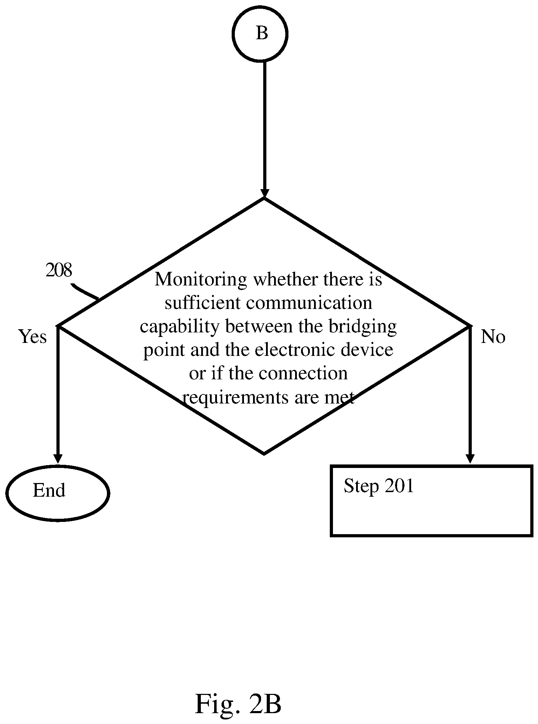

Please refer to Figs. 2A-2B, which illustrate flowcharts of the method for selecting a bridging point according to the present invention. It is important to note that although the following description uses the network connection module 10 as an example to illustrate the method of selecting the bridging point of the present invention, the method is not limited to use with the same structure as the network connection module 10 described above.

The process begins with step 201: searching for at least one node.

At first, step 201 involves searching for at least one node using the search module 20. Refer to Fig. 3A for an illustration of a first embodiment of the electronic device 1 in a network environment according to the present invention. The search module 20 searches for nodes 61 to 65 as shown in Figure 3A, wherein each node can correspond to different network devices, representing any network access device, electronic device, or controlled equipment, but the present invention is not limited to these descriptions.

Next, the process continues with step 202: confirming whether the electronic device has a connection requirement or whether there is a specified node among the at least one node.

Next, the processing module 30 confirms the connection requirements of the electronic device 1 to determine if there is a suitable node among the multiple nodes 61 to 65 found by the search module 20. The processing module 30 also checks if there is a specified node among the multiple nodes 61 to 65. Connection requirements may include signal strength, predefined priority, signal source, response time, usage traffic, time, hops, area, preference, authority, distance, frequency, temperature, humidity, altitude, atmospheric pressure, longitude, latitude, coordinates, load, age, lifespan, version, power, gender, identity, priority level, power consumption, air quality, luminous flux, spectrum, bandwidth, etc. The electronic device 1 may have different connection requirements under different circumstances, but the present invention is not limited to the listed items. The connection requirements can be determined by the processing module 30 based on the programs executed by the electronic device 1 or set by the user, with device defaults or obtained settings also considered as connection requirements, but the present invention is not limited to these items. The settings for specified nodes can be set by users or device defaults, but the present invention is not limited to these items.

If the electronic device 1 does not have a connection requirement and there is no specified node among the multiple nodes 61-65, then the process continues with step 203: randomly selecting a node from the searched nodes as the bridging point.

If the electronic device 1 has not set the connection requirement or the processing module 30 cannot confirm the connection requirement of electronic device 1 and no specified node is set among the at least one node, then the processing module 30 directly randomly selects a node from the multiple nodes 61-65 found as the bridging point for the electronic device 1 to connect to it.

If, in step 202, the electronic device 1 has a preset connection requirement or there is a specified node among the multiple nodes 61-65, then the process continues with step 204: confirming if there is a suitable node based on the connection requirement or specified node among the at least one node.

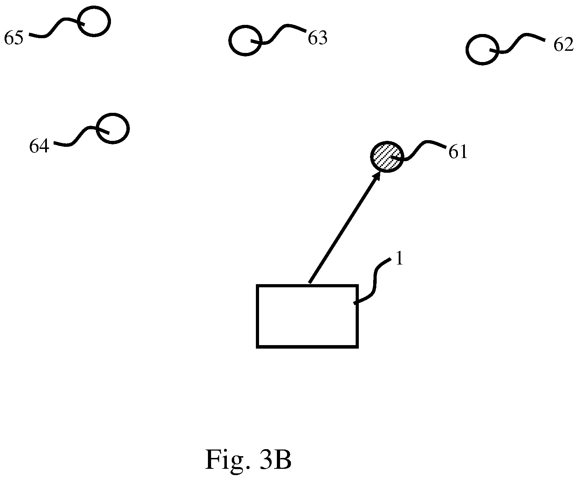

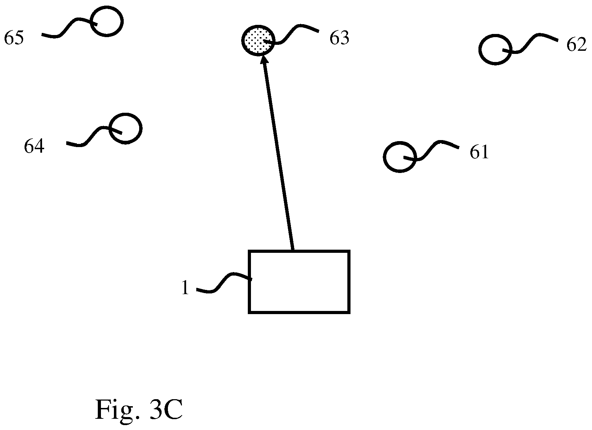

The processing module 30 may identify a single suitable node or multiple suitable nodes among the nodes 61 to 65. Please also refer to Figs. 3A to 3C, wherein Fig. 3A illustrates a schematic of a first embodiment of the electronic device in the network environment according to the present invention, Fig. 3B illustrates a schematic of a second embodiment of the electronic device in the network environment according to the present invention, and Fig. 3C illustrates a schematic of a third embodiment of the electronic device in the network environment according to the present invention.

As shown in Fig. 3A, the processing module 30 may identify nodes 61 and 64 that meet the connection requirements and node 63 as a specified node. Then the processing module 30 sets nodes 61, 63, and 64 as suitable nodes.

If the processing module 30 confirms that there are suitable nodes among the nodes 61 to 65, then the process continues with step 205: randomly selecting a bridging point from the suitable nodes.

As illustrated in Fig. 3A, the processing module 30 first identifies the suitable nodes 61, 63, and 64 among the nodes 61 to 65 and then randomly selects one of these suitable nodes as the bridging point, such as node 61. Thus, the electronic device 1 connects to the network via this bridging point.

On the other hand, if the processing module 30 finds one suitable node, then the process continues with step 206: setting the suitable node as the bridging point.

As shown in Fig. 3B, if the processing module 30 finds only one node 61 that meets the connection requirements of the electronic device 1 as the suitable node, the processing module 30 directly sets this suitable node (node 61) as the bridging point for the electronic device 1 to connect to it. Alternatively, as shown in Fig. 3C, if the processing module 30 finds only one specified node 63, then node 63 becomes the single suitable node, and the processing module 30 directly sets this suitable node (node 63) as the bridging point for the electronic device 1 to connect to it.

If the processing module 30 does not find a suitable node, then the process continues with step 207: using a random method, or finding the node closest to the connection requirement setting among the at least one node, to select as the bridging point.

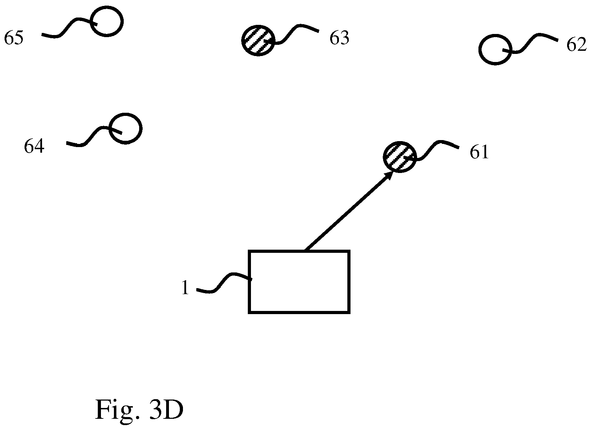

If the processing module 30 does not find a node that fully meets the connection requirements of the electronic device 1, it can directly use a random method to select a node from the multiple nodes 61 to 65 as the bridging point. Alternatively, as illustrated in Fig. 3D, which presents a schematic of a fourth embodiment of the electronic device 1 in the network environment according to the present invention, the processing module 30 can also find the node closest to the connection requirements among the multiple nodes 61 to 65 to serve as the bridging point. For example, due to connection requirements such as signal strength, predefined priority, signal source, response time, usage traffic, time, hops, area, preference, authority, distance, frequency, temperature, humidity, altitude, atmospheric pressure, longitude, latitude, coordinates, load, age, lifespan, version, power, gender, identity, priority level, power consumption, bandwidth, etc., the connection requirements of the electronic device 1 may need to meet six requirements. If the processing module 30 cannot find a node that meets the six requirements, it may settle for a node that meets five or four of the requirements as the suitable node to choose as the bridging point for the electronic device 1 to connect to it. As shown in Fig. 3D, suppose nodes 61 and 63 are the closest to the connection requirement setting; the processing module 30 randomly selects one node from nodes 61 and 63 as the bridging point. If there is only one node closest to the connection requirement setting, the processing module 30 directly selects that node as the bridging point. However, the method of finding the node closest to the connection requirement setting in the present invention is not limited to the methods listed above.

Finally, the process moves to step 208: monitoring whether there is sufficient communication capability between the bridging point and the electronic device or if the connection requirements are met.

Regardless of how the processing module 30 has identified the bridging point for the electronic device 1 to connect to it in any previous step, after the electronic device 1 connects, the monitoring module 50 continues to monitor whether the bridging point meets the connection requirements. It is possible that the electronic device 1 may change its connection requirements or the node or electronic device 1 may move such that the original bridging point no longer meets the connection requirements. If so, then when the original bridging point no longer meets the connection requirements, the processing module 30 returns to step 201 to reselect the bridging point from at least one node. Additionally, the monitoring module 50 also continuously monitors whether there is sufficient communication capability between the bridging point and the electronic device 1. If the node or electronic device 1 moves or for other reasons the original bridging point lacks sufficient communication capability, then the processing module 30 returns to step 201.

Furthermore, in the method of selecting the bridge node before step 202 or after step 208, it is possible to check whether there are preset or default connection conditions. For example, users can set their connection requirements as preset or default connection conditions. These preset or default connection conditions are stored in the storage module 40, and the processing module 30 prioritizes these preset or default connection conditions when selecting suitable nodes.

It is important to note that the method of selecting the bridging point of the present invention is not limited to the order of steps listed above; as long as the objectives of the present invention are achieved, the order of the steps can be changed.

Employing the network connection module 10 and the method of selecting the bridging point of this case ensures that the electronic device 1 can use suitable nodes as the bridging point and that different electronic devices 1 can also randomly connect to different suitable nodes, avoiding signal transmission delays caused by connecting to the same node.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. A method for selecting a bridging point, utilized by an electronic device (1) within a network connection environment (2) to select the bridging point, wherein the network connection environment (2) comprises at least one node (61) capable of connecting to the electronic device (1); the method includes the steps of:
searching for the at least one node (61) when the electronic device (1) is to connect;
determining whether the electronic device (1) has a connection requirement or whether there is a specified node (61) among the at least one node (61);
if the electronic device (1) has the connection requirement or there is the specified node (61) among the at least one node (61), identifying a suitable node (61) based on the connection requirement or the specified node (61) from the at least one node (61);
if the suitable node (61) is found, randomly selecting the bridging point from the suitable node (61); and
if the electronic device (1) does not have the connection requirement and there is no specified node (61) among the at least one node (61), randomly selecting the bridging point from the at least one node (61).

2. The method for selecting the bridging point as claimed in claim 1, wherein if no suitable node (61) is found, the bridging point is randomly selected from the at least one node (61).

3. The method for selecting the bridging point as claimed in claim 1, wherein if no suitable node (61) is found, a node (61) closest to meeting the connection requirement is selected as the bridging point from the at least one node (61).

4. The method for selecting the bridging point as claimed in claim 1, wherein if only a single suitable node (61) exists, the suitable node (61) is selected as the bridging point.

5. The method for selecting the bridging point as claimed in any of claims 1 to 4, further including the steps of:
monitoring whether the bridging point meets the connection requirement or has a communication capability; and
if the bridging point does not meet the connection requirement or does not have the communication capability, reselecting the bridging point from the at least one node (61).

6. The method for selecting the bridging point as claimed in any of claims 1 to 4, wherein the connection requirement includes at least one of the following conditions: signal strength, priority, signal source, response time, usage traffic, time, hop, area, preference, authority, distance, frequency, temperature, humidity, altitude, atmospheric pressure, longitude, latitude, coordinates, load, age, lifespan, version, power, gender, identity, priority level, power consumption, air quality, luminous flux, spectrum, or bandwidth.

7. The method for selecting the bridging point as claimed in claim 6, further including the steps of:
storing the connection requirement as a preset connection condition; and
preferentially finding the bridging point from the at least one node (61) based on the preset connection condition.

8. A network connection module (10) for use by an electronic device (1), enabling the electronic device (1) to select a bridging point within a network connection environment (2), wherein the network connection environment (2) comprises at least one node (61) capable of connecting to the electronic device (1); the network connection module (10) includes:
a search module (20) for finding the at least one node (61); and
a processing module (30) electrically connected to the search module (20), for determining when the electronic device (1) is to connect, whether the electronic device (1) has a connection requirement or there is a specified node (61) among the at least one node (61); if the electronic device (1) has the connection requirement or there is the specified node (61) among the at least one node (61), then the processing module (30) identifies a suitable node (61) based on the connection requirement or the specified node (61) from the at least one node (61); if the suitable node (61) is found, the processing module (30) randomly selects a bridging point from the suitable node (61) for connecting the electronic device (1) to the bridging point; and if the electronic device (1) does not have the connection requirement and there is no specified node (61) among the at least one node (61), then the processing module (30) randomly selects the bridging point from the at least one node (61) for connecting the electronic device (1) to the bridging point.

9. The network connection module (10) as claimed in claim 8, wherein if no suitable node (61) is found, the processing module (30) further randomly selects the bridging point from the at least one node (61).

10. The network connection module (10) as claimed in claim 8, wherein if no suitable node (61) is found, the processing module (30) further selects a node (61) closest to the connection requirement setting as the bridging point from the at least one node (61).

11. The network connection module (10) as claimed in claim 8, wherein if only a single suitable node (61) exists, the processing module (30) selects that suitable node (61) as the bridging point.

12. The network connection module (10) as claimed in any of claims 8 to 11, further comprising a monitoring module (50) for further monitoring whether the bridging point meets the connection requirement or has a communication capability; if the bridging point does not meet the connection requirement or does not have the communication capability, the processing module (30) reselects the bridging point from the at least one node (61).

13. The network connection module (10) as claimed in any of claims 8 to 11, wherein the connection requirement includes at least one of the following conditions: signal strength, predetermined priority, signal source, response time, usage traffic, time, hops, area, preference, authority, distance, frequency, temperature, humidity, altitude, atmospheric pressure, longitude, latitude, coordinates, load, age, lifespan, version, power, gender, identity, priority level, power consumption, air quality, luminous flux, spectrum, or bandwidth.

14. The network connection module (10) as claimed in claim 13, further comprising a storage module (40) for storing the connection requirement as a preset connection condition and enabling the processing module (30) to preferentially find the bridging point from the at least one node (61) based on the preset connection condition.
